# EUROPÄISCHE PATENTSCHRIFT

(11) **EP 1 436 515 B1**
(45) Veröffentlichungstag und Bekanntmachung des Hinweises auf die Patenterteilung: **05.10.2005**
(21) Anmeldenummer: 02772050.7
(22) Anmeldetag: 06.09.2002
(51) Int. Cl.: F16C 17/00, F16C 19/00, G01L 5/00

(54) **SENSORELEMENT ZUR ERFASSUNG EINER PHYSIKALISCHEN MESSGRÖSSE ZWISCHEN TRIBOLOGISCH HOCH BEANSPRUCHTEN KÖRPERN**
SENSOR ELEMENT FOR DETECTING A PHYSICAL MEASURING VARIABLE BETWEEN BODIES EXPOSED TO HIGH TRIBOLOGICAL STRAIN
ELEMENT DETECTEUR SERVANT A LA DETECTION D'UNE GRANDEUR PHYSIQUE A MESURER ENTRE DES CORPS SOUMIS A UNE CONTRAINTE TRIBOLOGIQUEMENT ELEVEE

(30) Priorität: 08.09.2001 DE 10144269
(43) Veröffentlichungstag der Anmeldung: 14.07.2004
(73) Patentinhaber: ROBERT BOSCH GMBH, 70442 Stuttgart (DE)
(72) Erfinder: MEYER, Klaus, 71254 Ditzingen (DE); NEMZOV, Julius, 73730 Esslingen (DE); MUELLER, Ulrich, CH-8704 Herrliberg (CH)
(86) Internationale Anmeldenummer: PCT/DE2002/003319
(87) Internationale Veröffentlichungsnummer: WO 2003/025408

(56) Entgegenhaltungen:
- EP-A- 1 058 106
- WO-A-95/08721
- U. MÜLLER, R. HAUERT, M. TOBLER: "ULTRAHARTSTOFF-BESCHICHTUNGEN AUS KOHLENSTOFF" 1997 , OBERFLÄCHEN UND WERKSTOFFE, NR. 32, PAGE(S) 8-15 XP009003699 in der Anmeldung erwähnt das ganze Dokument
- PEEKEN H ET AL: "MODERNE MESSTECHNIK MITTELS AUFGEDAMPFTER GEBER IN GLEIT-UND WAELZLAGERN" , KONSTRUKTION, SPRINGER-VERLAG. BERLIN, DE, VOL. 32, NR. 6, PAGE(S) 241-246 XP000195198 in der Anmeldung erwähnt das ganze Dokument

## Beschreibung

Die Erfindung betrifft ein Sensorelement zur Erfassung einer physikalischen Messgröße wie eines Druckes, einer Temperatur oder einer Kapazität zwischen zwei sich bei Betrieb relativ zueinander bewegenden, tribologisch hoch beanspruchten Körpern gemäß den Oberbegriffen der unabhängigen Ansprüche.

Ein Solches Sensorelement ist aus der EP 1 058 106 bekannt.

### Stand der Technik

Geschmierte Kontakte oder elastohydrodynamische Kontakte, wie sie beispielsweise bei Lagern (Kugellager, Rollenlager oder Gleitlager) oder anderen, miteinander in Verbindung stehenden Elementen wie Zahnradkontakten, Nocken-Stößel-Kontakten usw. vorkommen, unterliegen sehr hohen tribologischen Belastungen. Unter solchen Betriebsbedingungen kann es vorkommen, dass der Schmierfilm zwischen den sich relativ zueinander bewegenden Körpern lokal unzureichend ist oder unterbrochen wird, d.h. es kommt zu einer sogenannten "Mischreibung", wodurch sehr rasch die Grenzen der Belastbarkeit der eingesetzten Werkstoffe erreicht oder sogar überschritten werden, was Schäden an den entsprechenden Bauteilen verursacht. Insofern ist es wichtig, die Kontakttemperaturen, Kontaktdrücke und/oder Kontaktspannungen in solchen hochbelasteten, geschmierten Bauteilkontakten bei Betrieb zu überwachen, um darüber das Auftreten kritischer Beanspruchungen, beispielsweise in Folge hoher Reibungsenergiedichten, bei deren Überschreitung es zum Ausfall bei-spielsweise von Komponenten eines Einspritzsystems durch Adhäsion ("Fressen") in der Kraftfahrzeugtechnik kommt, zumindest zu erfassen, beispielsweise zur Untersuchung der Schadensmechanismen, idealerweise aber zu vermeiden.

Da Kontaktstellen vor allem bei Mischreibung tribologisch sehr hohen Belastungen unterliegen, müssen auch die eingesetzten Sensorelemente mechanisch bzw. tribologisch sehr belastbar sein. Andererseits sollten sie die zu erfassenden Messgrößen bzw. Reibungsbedingungen möglichst nicht beeinflussen.

Aus H. Peeken und A. Köhler, Konstruktion 32 (6/1980), Seiten 241-246 "Moderne Messtechnik mittels aufgedampfter Geber in Gleit- und Wälzlagern" ist ein Sensorelement zur Erfassung von Temperatur oder Druck zwischen zwei sich relativ zueinander bewegenden, tribologisch hoch beanspruchten Körpern bekannt. Dabei wird ausgenutzt, dass bei vielen Materialien der elektrische Widerstand sowohl von der Temperatur als auch vom Druck abhängt, so dass nach einer Kalibriermessung über eine einfache Widerstandsmessung Druck oder Temperatur bestimmbar sind.

Im Einzelnen werden in der genannten Veröffentlichung auf den zu untersuchenden Bauteilen Metallschichten aufgebracht, wobei durch die Formgebung und Positionierung dieser Metallschichten erreicht wird, dass das Messsignal an der gewünschten Stelle aufgenommen wird. Weiter ist erforderlich, dass der eigentliche Sensiersteg und die damit in Verbindung. stehenden Kontaktflächen bzw. Leiterbahnen gegenüber dem darunter befindlichen, normalerweise metallischen Bauteil elektrisch isoliert sind. Dazu wird dort zwischen dem Sensiersteg und dem damit versehenen Bauteil eine Glasschicht oder eine Keramikschicht, beispielsweise eine Siliziumoxidschicht oder Aluminiumoxidschicht, als isolierende Zwischenschicht erzeugt. Daneben sind auch bereits Cr₂O₃-Schichten als isolierende Zwischenschichten bekannt.

Der Nachteil der bekannten Isolationsschichten zwischen dem Sensiersteg und dem damit versehenen Bauteil liegt darin, dass sie aufgrund ihres unterschiedlichen thermischen Ausdehnungskoeffizienten beispielsweise auf Metallen vielfach schlecht haften, was sich auch durch eine zusätzliche Haftvermittlungsschicht häufig nicht befriedigend lösen lässt. Ein weiterer Nachteil liegt darin, dass bisher bekannte Isolationsschichten relativ spröde und tribologisch unzureichend belastbar sind.

Aufgabe der vorliegenden Erfindung war die Bereitstellung eines Sensorelementes zur Erfassung einer physikalischen Messgröße wie Druck oder Temperatur zwischen zwei sich bei Betrieb relativ zueinander bewegenden, tribologisch hoch beanspruchten Körpern, wobei der eigentliche Sensiersteg oder allgemeiner die eigentliche sensitive Schicht von dem darunter liegenden Körper über eine Isolationsschicht getrennt ist, die sowohl eine genügende elektrische Isolation gewährleistet, als auch hohen tribologischen Beanspruchungen gewachsen ist. Dabei ist unter einer Isolationsschicht mit genügender elektrischer Isolation eine Schicht zu verstehen, deren elektrische Leitfähigkeit nicht notwendigerweise Null sein muss, die aber gegenüber der elektrischen Leitfähigkeit der sensitiven Schicht erheblich niedriger, vorzugsweise vernachlässigbar klein ist.

### Vorteile der Erfindung

Das erfindungsgemäße Sensorelement hat gegenüber dem Stand der Technik den Vorteil, dass die Isolationsschicht auf dem damit versehenen Körper auch bei höchsten mechanischen Beanspruchungen sehr gut haftet und sich auch bei Temperaturwechseln und vorübergehenden Temperaturerhöhungen nicht ablöst. Weiter ist sie gegenüber den aus dem Stand der Technik bekannten Isolationsschichten deutlich weniger spröde und neigt weniger zu Verschleiß.

Besonders vorteilhaft ist weiter, wenn die Isolationsschicht aus mindestens zwei Teilschichten besteht, wobei eine eine tribologisch hoch belastbare Teilschicht ist, die eine vergleichsweise hohe Härte, d.h. eine Härte von mindestens 1000 HV, vorzugsweise mehr als 3000 HV, und einen vergleichsweise niedrigen Reibwert aufweist, und wobei eine eine Teilschicht ist, die gegenüber der tribologisch höher belastbaren Teilschicht eine deutlich verringerte elektrische Leitfähigkeit besitzt. Auf diese Weise lassen sich die Funktionen "elektrische Isolation" und "tribologische Belastbarkeit", die die Isolationsschicht gleichzeitig erfüllen muss, auf diese beiden Teilschichten aufteilen.

Unter einer tribologisch hoch belasteten oder belastbaren Schicht ist im Übrigen im Rahmen der vorliegenden Beschreibung eine Schicht zu verstehen, die Kontaktdrücken von mindestens 1 MPa, insbesondere 10 MPa bis 20 GPa, ausgesetzt ist und diesen insbesondere auch auf Dauer standhält.

Vorteilhafte Weiterbildungen der Erfindung ergeben sich aus den in den Unteransprüchen genannten Maßnahmen.

So ist vorteilhaft, wenn die tribologisch höher belastbare Teilschicht der Isolationsschicht zumindest im Wesentlichen aus Kohlenstoff, insbesondere aus diamantartigem oder amorphem, diamantähnlichem Kohlenstoff besteht. Weiter ist vorteilhaft, wenn die elektrisch vergleichsweise schlecht leitende Teilschicht neben Kohlenstoff, vorzugsweise als Hauptbestandteil, der bevorzugt in Form von diamantartigem oder amorphem, diamantähnlichem Kohlenstoff vorliegt, zusätzlich Sauerstoff und Silizium, vorzugsweise als Nebenbestandteile, enthält, was eine Herabsetzung der elektrischen Leitfähigkeit des ansonsten elektrisch relativ gut leitenden amorphen, diamantähnlichen Kohlenstoffes bewirkt.

Insbesondere hat es sich hinsichtlich einer Verbesserung der Haftung und der tribologischen Beständigkeit als vorteilhaft herausgestellt, wenn die Isolationsschicht eine Mehrzahl von übereinander geordneten, wiederkehrenden Teilschichtpaaren aufweist, wobei unter dem Sensiersteg oder der sensitiven Schicht zunächst die tribologisch höher belastbare Teilschicht und darunter dann erst die gegenüber der sensitiven Schicht elektrisch schlecht leitende oder isolierende Teilschicht vorgesehen ist.

Alternativ zur Verwendung einer Isolationsschicht aus mindestens zwei Teilschichten ist es jedoch in einigen Anwendungsfällen, wie ausgeführt, vorteilhaft auch ausreichend, wenn die Isolationsschicht nicht aus mindestens zwei Teilschichten unterschiedlicher Zusammensetzung besteht, sondern wenn sie zumindest im Wesentlichen aus Kohlenstoff besteht oder neben Kohlenstoff Sauerstoff und Silizium, enthält. In diesem Fall werden die Anforderungen "tribologisch hoch belastbar" und "elektrisch isolierend" durch diese eine Schicht realisiert, die dazu senkrecht zur Schichtebene entweder eine homogene Zusammensetzung oder auch eine gradierte Zusammensetzung aufweisen kann, wodurch der Übergang zu einer Isolationsschicht mit mehreren Teilschichten fließend wird.

Um die Abriebbeständigkeit und mechanische Belastbarkeit der vorzugsweise in Form eines Sensiersteges ausgebildeten sensitiven Schicht zu verbessern, wobei unter einem Sensiersteg auch ein mäanderförmig strukturierter Steg zu verstehen ist, und diese insbesondere im Fall von Mischreibung vor einer schnellen Zerstörung zu schützen, ist es vorteilhaft, wenn der Sensiersteg oder die sensitive Schicht mit einer abriebbeständigen und elektrisch schlecht leitenden oder isolierenden Deckschicht mit einer Dicke von vorzugsweise weniger als 500 nm versehen ist. Diese Deckschicht ist vorteilhaft ebenfalls eine Schicht aus Kohlenstoff, insbesondere diamantartigem oder amorphem diamantähnlichem Kohlenstoff, wobei die Deckschicht zur Verringerung der elektrischen Leitfähigkeit neben Kohlenstoff als Hauptbestandteil zusätzlich auch Sauerstoff und Silizium enthalten kann. Insofern ist die Deckschicht der Isolationsschicht oder den Teilschichten der Isolationsschicht gegenüber gleich oder sehr ähnlich aufgebaut und lässt sich daher vorteilhaft auch über ein entsprechend gleiches oder ähnliches Herstellungsverfahren aufbringen.

Als Material für die eigentliche sensitive Schicht eignen sich nur wenige, speziell ausgewählte Metalle wie Chrom, Platin, Titan, eine NiCr-Legierung, vorzugsweise der Zusammensetzung 80 Gew.% Ni und 20 Gew.% Cr, oder eine Nickel-Kupfer-Mangan-Legierung, vorzugsweise der Zusammensetzung 86 Gew.% Cu, 12 Gew.% Mn und 2 Gew% Ni (Manganin).

Die eigentliche sensitive Schicht ist weiter vorteilhaft möglichst klein und flach gehalten, damit sie im Bereich der Kontaktstelle durch ihre Geometrie die zu erfassende physikalische Messgröße möglichst wenig beeinflusst. Besonders vorteilhaft ist, wenn die sensitive Schicht eine Länge von 10 µm bis 5 mm, eine Breite von 50 nm bis 50 µm, und eine Dicke von weniger als 200 nm, insbesondere weniger als 10 nm, aufweist.

Eine weitere vorteilhafte Möglichkeit um die sensitive Schicht vor einem schnellen Verschleiß, vor allem in kritischen Betriebszuständen, zu schützen, und ihre tribologische Belastung bei Betrieb zu vermindern, besteht darin, die sensitive Schicht auf der Isolationsschicht innerhalb einer Ausnehmung anzuordnen, die in einem Oberflächenbereich des entsprechenden Körpers oder der Isolationsschicht erzeugt worden ist.

Damit dabei eine möglichst präzise Erfassung der gewünschten physikalischen Messgröße erfolgen kann, sollte die Oberkante der sensitiven Schicht oder der mit der Deckschicht versehenen sensitiven Schicht möglichst bündig mit der Oberfläche des Körpers abschließen oder diese um maximal 500 nm überragen bzw. gegenüber dieser um maximal 500 nm zurückgesetzt sein. Besonders vorteilhaft ist, wenn die sensitive Schicht die Oberfläche des Körpers in der Größenordnung von dessen Oberflächenrauhigkeit überragt bzw. gegenüber dieser entsprechend zurückgesetzt ist, d.h. möglichst um einen Wert von weniger als 200 nm.

### Zeichnungen

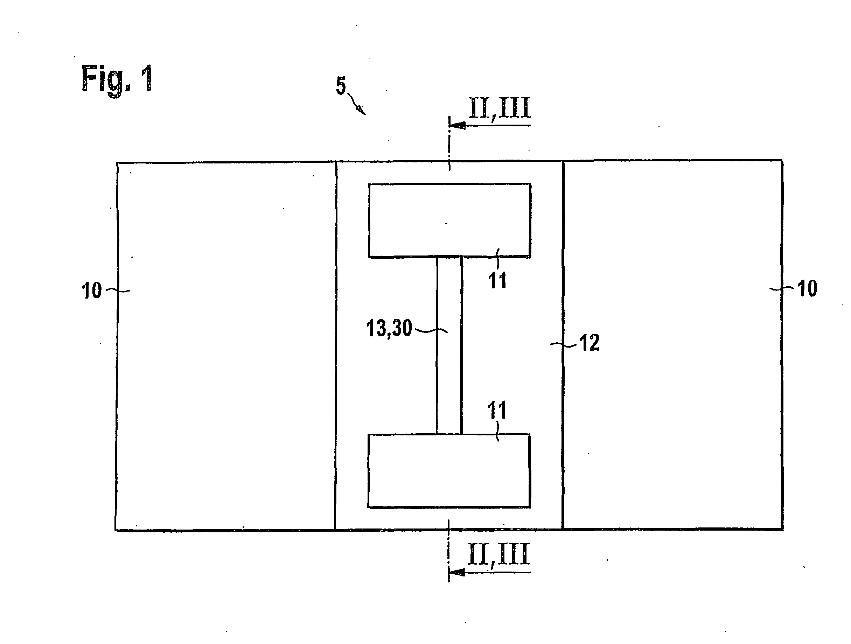

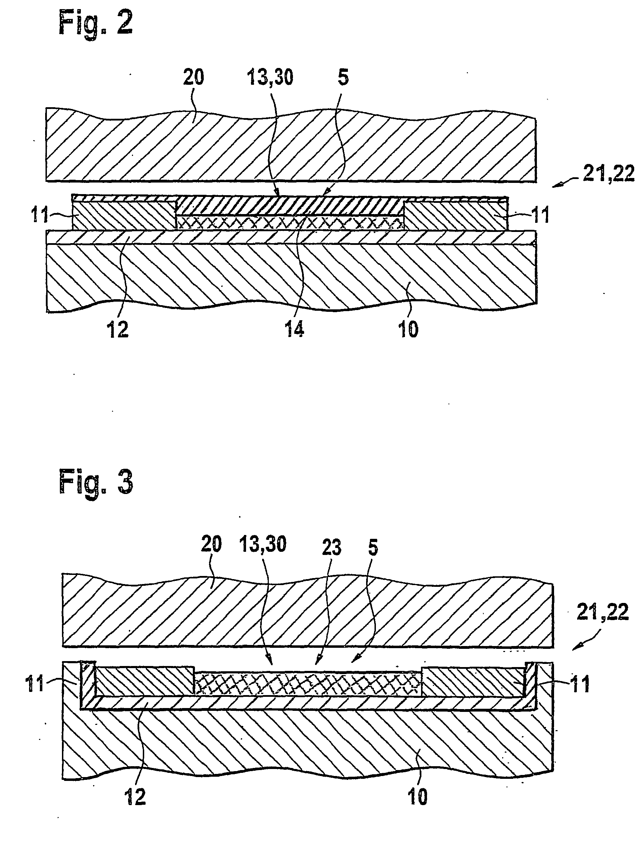

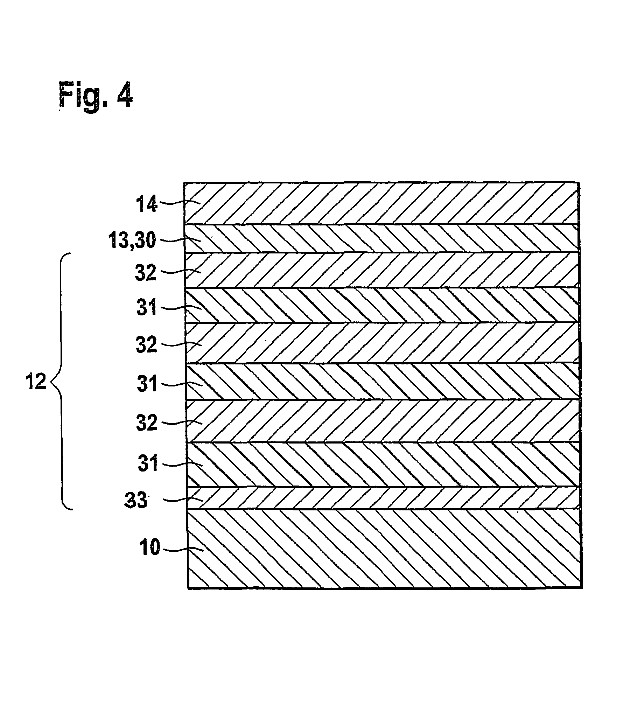

Die Erfindung wird anhand der Zeichnungen und in der nachfolgenden Beschreibung näher erläutert. Es zeigt Figur 1 eine Draufsicht auf einen Körper mit einem darauf aufgebrachten Sensorelement, Figur 2 einen Schnitt durch Figur 1 entlang der eingezeichneten Schnittlinie, wobei zusätzlich ein zweiter Körper dargestellt ist, der von dem ersten Körper beabstandet ist und sich relativ zu diesem bewegt, Figur 3 eine alternative Ausführungsform zu Figur 2, die sich ebenfalls als Schnitt durch Figur 1 entlang der eingezeichneten Schnittlinie ergibt, und Figur 4 eine Detaildarstellung des Schichtaufbaus des Sensorelementes auf dem Körper gemäß Figur 2 oder auch Figur 3 (mit einer Deckschicht) im Schnitt.

### Ausführungsbeispiele

Die Figur 1 zeigt ein metallisches Substrat 10, beispielsweise eine metallische Verteilerwelle in einem Hochdruckeinspritzsystem eines Kraftfahrzeuges oder eine sonstige technische Oberfläche mit einer Rauheit, die bis zu einige µm betragen kann, auf dem bereichsweise eine Isolationsschicht 12 abgeschieden ist, auf der sich zwei Kontaktflächen 11 befinden, die über eine als Sensiersteg 13 ausgebildete sensitive Schicht 30 miteinander verbunden sind, so dass die Kontaktflächen 11 und der Sensiersteg 13 eine Doppel-T-Struktur bilden, die als Sensorelement 5 zusammen mit nicht dargestellten Leiterbahnen als Teil einer elektronischen Messbrücke mit externen elektronischen Bauteilen verbunden ist. Der Sensiersteg 13 verändert sich weiter unter dem Einfluss einer zu erfassenden physikalischen Messgröße, insbesondere einem sich ändernden Druck, einer sich ändernden mechanischen Spannung oder einer sich ändernden Temperatur in mindestens einer messbaren physikalischen Eigenschaft, insbesondere seinem elektrischen Widerstand. Weiter kann auch eine sich ändernde elektrische Kapazität oder eine sich ändernde Spaltweite mit dem beispielsweise als Teil eines Kondensators verschalteten Sensorelement 5 erfasst werden.

Neben Temperatur und/oder Druck im Kontaktbereich zwischen den Kontaktflächen 11 ist so, beispielsweise über die Kapazität, auch die Weite eines Spaltes 21 zwischen den Kontaktflächen 11 insbesondere als Funktion der Zeit erfassbar, wobei das Medium bzw. Schmiermittel zwischen den Kontakflächen 11 das Dielektrikum und die Kontaktflächen 11 die Platten eines Kondensators bilden bzw. entsprechend verschaltet sind.

Die Figur 2 zeigt neben dem Substrat 10 einen diesem gegenüber angeordneten metallischen Gegenkörper 20, beispielsweise eine Buchse einer Verteilerwelle. Das Substrat 10 und der Gegenkörper 20 sind zudem über einen Spalt 21 voneinander getrennt, in dem sich ein Schmiermittel 22, beispielsweise Öl oder ein Kraftstoff, befindet. Weiter zeigt Figur 2, dass beispielsweise zur Erfassung eines Kontaktdruckes und/oder einer Kontakttemperatur zwischen den sich relativ zueinander bewegenden, tribologisch hoch beanspruchten Körpern 10, 20 das Sensorelement 5 angeordnet ist. Dabei ist erkennbar, dass sich die Kontaktflächen 11 und der Sensiersteg 13 auf der Isolationsschicht 12 befinden, und dass der Sensiersteg 13 mit einer zusätzlichen Deckschicht 14 versehen ist, d.h. der auf der Isolationsschicht 12 befindliche Sensiersteg 13 besteht aus der Deckschicht 14 und der hinsichtlich der zu erfassenden physikalischen Messgröße sensitiven Schicht 30.

Die Deckschicht 14 ist im erläuterten Beispiel eine abriebbeständige, elektrisch schlecht leitende oder isolierende Deckschicht mit einer Dicke von weniger als 500 nm, die amorphen, diamantähnlichen Kohlenstoff vorzugsweise als Hauptbestandteil und Sauerstoff und Silizium vorzugsweise als Nebenbestandteil enthält. Alternativ kann die Deckschicht 14 auch im Wesentlichen nur aus Kohlenstoff, insbesondere aus amorphem diamantähnlichem Kohlenstoff bestehen, da sie dann immer noch eine gegenüber der sensitiven Schicht 30 deutliche niedrigere elektrische Leitfähigkeit aufweist.

Die den Sensiersteg 13 bildende sensitive Schicht 30 besteht im erläuterten Beispiel aus Chrom, Titan, Platin, einer NiCr-Legierung mit 80 Gew.% Ni und 20 Gew.% Cr oder einer Nickel-Kupfer-Mangan-Legierung mit 86 Gew.% Cu, 12 Gew.% Mn und 2 Gew.% Ni (Manganin), und hat einen elektrischen Widerstand von 500 Ω bis 3 kΩ.

Insgesamt hat der Sensiersteg 13 im erläuterten Beispiel je nach konkreter Anwendung eine Länge von 10 µm bis 5 mm, eine Breite von 50 nm bis 50 µm und eine Dicke von weniger als 200 nm, bevorzugt weniger als 10 nm. Schließlich ist in Figur 2 erkennbar, dass der Sensiersteg 13 bevorzugt gegenüber den Kontaktflächen 11 eine unterschiedliche Dicke, insbesondere eine erheblich kleinere Dicke, aufweist.

Das Ausführungsbeispiel gemäß Figur 3 unterscheidet sich von dem Ausführungsbeispiel gemäß Figur 2 lediglich dadurch, dass eine entsprechend den Dimensionen der Kontaktflächen 11 bzw. des Sensiersteges 13 dimensionierte Ausnehmung 23 im Bereich der Oberfläche des Substrates 10 vorgesehen ist, wobei der Sensiersteg 13 und die Kontaktflächen 11 sich auf der Isolationsschicht 12 befinden, die den Boden der Ausnehmung 23 bedeckt. Dabei schließt die Oberkante des Sensiersteges 13, der gegebenenfalls mit der optional vorhandenen Deckschicht 14 versehen ist, möglichst bündig mit der Oberfläche des Körpers 10 ab. Die Ausnehmung 23 wurde dazu zunächst über eine entsprechend ausgestaltete Maske in das Substrat 10 eingeätzt, und danach wurde die Isolationsschicht 12 genau im Bereich der Ausnehmung 23 so aufgebracht, dass die Ausnehmung 23 danach wieder insbesondere vollständig gefüllt ist. Die Größe der Ausnehmung 23 sollte dazu so bemessen sein, dass sowohl die Kontaktflächen 11 und zugehörige Leiterbahnen als auch der Sensiersteg 13 auf der Isolationsschicht 12 vollständig Platz finden können. Anschließend wurde über eine weitere, entsprechend ausgestaltete Maske eine zweite Ausnehmung für die Kontaktflächen 11 und zugehörige Leiterbahnen in die Isolationsschicht 12 eingeätzt. In diese werden dann die Kontaktflächen 11 und die zugehörigen Leiterbahnen aufgebracht, so dass die zweite Ausnehmung bevorzugt erneut vollständig gefüllt ist. Danach wird, falls erforderlich, für den Sensiersteg 13 mit einer entsprechenden Maske eine dritte Ausnehmung in die Isolationsschicht 12 eingeätzt, in die dann der Sensiersteg 13 bzw. die sensitive Schicht 30 abgeschieden wird. Sofern nachfolgend eine zusätzliche Deckschicht 14 und/oder Haftschicht 33 aufgebracht werden, ist dies beim Ätzen insbesondere der ersten Ausnehmung entsprechend zu berücksichtigen. Die Dekcschicht 14 erstreckt sich dabei bevorzugt auch über die Kontaktflächen 11 und gegebenefalls zugehörige Leiterbahnen, soweit in diesem Bereich bei Betrieb ein Kontakt mit dem Gegenkörper 20 gegeben ist.

Alternativ kann die Oberkante des Sensiersteges 13 bzw. die Oberkante der Deckschicht 14 auch die Oberfläche des Substrates 10 auch um maximal 500 nm überragen bzw. gegenüber dieser zurückgesetzt sein. Bevorzugt ist die Höhe, um die der Sensiersteg 13 bzw. die Deckschicht 14 die Oberfläche des Substrates 10 überragt bzw. gegenüber dieser zurückgesetzt ist, kleiner als die Oberflächenrauhigkeit des Substrates 10.

In einer weiteren, nicht dargestellten alternativen Ausführungsform kann auf dem Substrat 10 auch zunächst die Isolationsschicht 12 abgeschieden, und danach die Ausnehmung 23 in der Isolationsschicht 12 erzeugt worden sein, wonach sich die Abscheidung bzw. Erzeugung des Sensiersteges 13 und der Kontaktflächen 11 in der Ausnehmung anschließt.

Die Figur 4 zeigt detailliert den Aufbau der Isolationsschicht 12 auf dem Substrat 10, wobei zwischen dem Substrat 10 und der Isolationsschicht 12 zusätzlich eine Haftschicht 33 und auf der Isolationsschicht 12 neben der sensitiven Schicht 30 die Deckschicht 14 vorgesehen ist. Der spezifische elektrische Widerstand der Isolationsschicht 12 liegt insgesamt bei ca. 3*10⁷ Ωm.

Die Haftschicht 33 gemäß Figur 4 hat eine Dicke von 20 nm bis 1 µm und kann im Übrigen optional auch zwischen dem Sensiersteg 13, d.h. der sensitiven Schicht 30 und der Deckschicht 14, mit einer Dicke von 20 nm bis 1 µm vorgesehen sein. Im erläuterten Ausführungsbeispiel war eine zusätzliche Haftschicht zwischen sensitiver Schicht 30 und Deckschicht 14 nicht erforderlich.

Die Haftschicht 33 besteht bevorzugt aus Kohlenstoff, insbesondere diamantartigem Kohlenstoff bzw. amorphem diamantähnlichem Kohlenstoff, und Silizium, oder sie enthält diese Elemente als wesentliche Bestandteile. Alternativ kann sie auch aus einem Metall wie Chrom oder Titan, einer Metalllegierung oder einem Halbleiter wie Silizium ausgebildet sein, oder die Haftschicht 33 weist mehrere, übereinander angeordnete Teilschichten unterschiedlicher Zusammensetzung auf. Dabei ist eine dieser Teilschichten beispielsweise eine Schicht, die aus Kohlenstoff, insbesondere diamantartigem Kohlenstoff bzw. amorphem diamantähnlichem Kohlenstoff, und Silizium, besteht, oder die diese Elemente als wesentliche Bestandteile enthält, und eine andere dieser Teilschichten beispielsweise eine Schicht, die aus einem Metall wie Chrom oder Titan oder einer Metalllegierung besteht. Es kommen jedoch auch andere Materialkombinationen, auch der weiteren, oben genannten Materialien für die Haftschicht 33, für die Teilschichten in Frage.

Die Isolationsschicht 12 gemäß Figur 4 besteht aus insgesamt sechs Teilschichten, wobei diese sich zu drei Teilschichtpaaren zusammenfassen lassen. Jede dieser sechs Teilschichten hat im erläuterten Beispiel eine Dicke von ca. 660 nm. Die die Isolationsschicht 12 bildenden Teilschichten teilen sich dabei in gegenüber dem Sensiersteg 13 elektrisch zumindest schlecht leitende Teilschichten 31 und gegenüber den vergleichsweise schlecht leitenden Teilschichten 31 tribologisch höher belastbare Teilschichten 32 auf, wobei die tribologisch höher belastbaren Teilschichten 32 gleichzeitig eine gegenüber den vergleichsweise schlecht leitenden Schichten 31 höhere elektrische Leitfähigkeit aufweisen bzw. diesen gegenüber elektrisch gut leitend sind. Insbesondere besitzt die tribologisch höher belastbare Teilschicht 32 eine gegenüber der vergleichsweise schlecht leitenden Schicht 31 möglichst hohe Härte, vorzugsweise eine Härte größer 1000 HV, besonders bevorzugt größer 3000 HV, und einen möglichst niedrigen Reibwert, vorzugsweise einen Reibwert kleiner 0,01.

Die tribologisch höher belastbare Schicht 32 besteht bevorzugt zumindest im Wesentlichen aus Kohlenstoff, insbesondere aus amorphem diamantähnlichem Kohlenstoff. Die elektrisch vergleichsweise schlecht leitende Schicht 31 besteht bevorzugt aus Kohlenstoff, insbesondere amorphem diamantähnlichem Kohlenstoff, und enthält daneben vor allem zur Verringerung der elektrischen Leitfähigkeit zudem Sauerstoff und Silizium.

Im Übrigen ist wichtig, dass sich unmittelbar unter dem Sensiersteg 13 bzw. der sensitiven Schicht 30 zunächst eine tribologisch höher belastbare Schicht, d.h. die Teilschicht 32, und darunter dann eine elektrisch gegenüber dem Sensiersteg 13 zumindest schlecht leitende Teilschicht, d.h. die Teilschicht 31, befindet. Diese beiden Teilschichten 31, 32 bilden ein Teilschichtpaar, das, wie in Figur 4 dargestellt, mehrmals wiederkehrt.

Generell besitzen die tribologisch höher belastbare Teilschicht 32 und die elektrisch vergleichsweise zumindest schlecht leitende Teilschicht 31 jeweils eine Schichtdicke von 50 nm bis 5 µm, insbesondere von 300 nm bis 1 µm.

Zur Erzeugung von amorphen, diamantähnlichen Kohlenstoffschichten, wie sie in den vorstehend erläuterten Beispielen zur Herstellung der Isolationsschicht 12, der Deckschicht 14 und der Haftschicht 33 benötigt werden, sind aus dem Stand der Technik vielfältige Herstellungsverfahren bekannt.

Ein Überblick über die Eigenschaften von amorphen diamantähnlichen Kohlenstoffschichten wird beispielsweise in J. Robertson, "Hard Amorphous (Diamond-like) Carbon", Progress in Solid State Chemistry, 21, 4, (1991), Seiten 199 bis 333, oder U. Müller, R. Hauert und M. Tobler, "Ultrahartstoff-Beschichtungen aus Kohlenstoff", Oberflächen und Werkstoffe, 38, (1997), Seiten 8 bis 15, gegeben.

Zur Funktion als abriebfeste Schutzschichten haben sich vor allem mit PACVD ("Plasma Activated Chemical Vapour Deposition") abgeschiedene, amorphe diamantähnliche Kohlenstoffschichten etabliert. Dabei wird in einer Abscheidekammer unter niedrigem Gasdruck von weniger als 10 kPa durch Anlegen einer genügend hohen Spannung (Gleichspannung oder Wechselspannung von wenigen Hertz bis einigen GHz), beispielsweise einer Hochfrequenzspannung von 13,56 MHz, ein Plasma erzeugt, dem als Reaktivgas beispielsweise Acetylen oder ein anderes Kohlenwasserstoffgas wie ein bei Standardbedingungen gasförmiges Alkan (Methan, Ethan, Propan, Butan, ...), Alken (Ethen, Propen, Buten, ...) oder Alkin oder auch eine bei Standardbedingungen flüssige Verbindung wie Benzol, Cyclohexan oder Toluol zugeführt wird. Bevorzugt ist Acetylen, da dieses Gas das höchste Kohlenstoff-Wasserstoff-Verhältnis aufweist und die dichtesten und härtesten Schichten ergibt.

Die so erzeugten amorphen diamantähnlichen Kohlenstoffschichten, die besser auch als Kohlenwasserstoffschichten bezeichnet werden, weisen in der Regel einen nicht sehr hohen spezifischen elektrischen Widerstand in der Größenverordnung von 10⁴ Ωm auf. Bei einer typischen Schichtdicke von ca. 1 µm und einer Kontaktfläche von ca. 0,5 cm² ergibt dies einen Kurzschlusswiderstand von ca. 200 Ω. Dieser Wert ist zu vergleichen mit dem gewünschten elektrischen Widerstand des Sensiersteges 13, der in der Größenordnung von 1 kΩ liegt. Um eine genügende elektrische Isolation des Sensiersteges 13 gegenüber der Isolationsschicht 12 zu erzielen, ist es jedoch wünschenswert, dass die Isolationsschicht 12 einen spezifischen elektrischen Widerstand aufweist, der mindestens drei Größenordnungen größer ist, d.h. vorzugsweise bei ca. 10⁷ Ωm liegt.

Diese Erhöhung des spezifischen elektrischen Widerstandes der Isolationsschicht 12 wird über die Zusammensetzung der Isolationsschicht 12 und/oder durch die erläuterte Aufteilung in Teilschichten 31, 32 erreicht, wobei für die Isolationsschicht 12 als Ganzes die mechanischen Eigenschaften einer reinen, amorphen diamantähnlichen Kohlenstoffschicht weitgehend erhalten bleiben.

Die gewünschte Erhöhung des spezifischen elektrischen Widerstandes einer amorphen diamantähnlichen Kohlenstoffschicht zur Ausbildung der elektrisch zumindest schlecht leitenden Teilschicht 31 lässt sich am Einfachsten durch eine Änderung der Abscheideparameter beim Herstellungsverfahren, insbesondere eine Beimischung eines Reaktivgases wie eines Organosilanols bei der Schichtabscheidung, erreichen. Dabei nutzt man aus, dass durch den Einbau von beispielsweise Silizium-Sauerstoff-Verbindungen in die amorphe, diamantähnliche Kohlenstoffschicht, deren elektrische Leitfähigkeit herabgesetzt wird.

Diese Vorgehensweise hat ihre Grenzen aber darin, dass durch den Einbau dieser zusätzlichen Verbindungen bzw. Elemente zwar der spezifische elektrische Widerstand erhöht wird, gleichzeitig damit aber eine unakzeptable Verschlechterung der tribologischen Eigenschaften der hergestellten Schicht einher geht. So werden amorphe, diamantähnliche Kohlenstoffschichten durch Zugabe von Hexamethyldisiloxan glasartig, so dass man eine sehr spröde, hohen mechanischen Ansprüchen nicht mehr gewachsene Schicht erhält.

Durch die vorgesehene Aufteilung der Isolationsschicht 12 in zwei Teilschichten 31, 32 mit unterschiedlichen Funktionen gelingt es insgesamt sehr gut und einfach, die an die Isolationsschicht 12 gestellten Anforderungen sowohl hinsichtlich elektrischer Leitfähigkeit als auch mechanischer Beständigkeit zu erfüllen. Insbesondere erhält man durch die erläuterte Abfolge der elektrisch zumindest schlecht leitenden Teilschicht 31 und der tribologisch höher belastbaren, elektrisch besser leitenden Schicht 32 insgesamt eine Isolationsschicht 12, die mechanisch sehr belastbar ist, eine ausreichende Duktilität und Haftung aufweist, und die insgesamt elektrisch genügend isolierend ist.

Aufbauend auf diesen Vorüberlegungen erfolgt die Erzeugung der Haftschicht 33 bevorzugt durch Abscheidung eines Metalls oder einer Kombination verschiedener Metalle mittels PVD ("Physical Vapour Deposition"), CVD ("Chemical Vapour Deposition") oder PACVD ("Plasma Activated Chemical Vapour Deposition") unter Einsatz eines metallhaltigen Gases, beispielsweise eines Metallchlorides oder eines Organometalls, als Reaktivgas. Daneben kommt als Reaktivgas zur Abscheidung der Haftschicht 33 auch Tetramethylsilan oder eines der erwähnten Kohlenwasserstoffgase in Frage.

Die elektrisch zumindest schlecht leitende Teilschicht 31 wird mit Hilfe des erläuterten PACVD-Verfahrens unter Einsatz einer Mischung von einem oder mehreren Gasen aus der Gruppe Sauerstoff, Silan, insbesondere Monosilan, Organosilan, insbesondere Tetramethylsilan, Organosilanol, insbesondere Hexamethyldisiloxan, und Kohlenwasserstoffgas als Reaktivgas abgeschieden. Bevorzugt wird eine Mischung von Hexamethyldisiloxan und Acetylen als Reaktivgas eingesetzt, die besonders bevorzugt aus 75 Vol.% Hexamethyldisiloxan und 25 Vol.% Acetylen besteht. Alternativ kann jedoch auch ausschließlich Hexamethyldisiloxan eingesetzt werden. Zur Abscheidung der tribologisch höher belastbaren Teilschicht 32, die gleichzeitig elektrisch besser leitend ist, wird in dem erläuterten PACVD-Verfahren bevorzugt Acetylen als Reaktivgas eingesetzt.

Die die Isolationsschicht 12 bildende Schichtfolge aus den Teilschichten 31, 32 wird schließlich bevorzugt dadurch erzeugt, dass mit dem erläuterten PACVD-Verfahren die gesamte Beschichtung in einem Durchgang, d.h. ohne Unterbrechung des Plasmas, hergestellt wird, wobei beim Übergang von einer Teilschicht auf die andere ein Wechsel des Reaktivgases entweder abrupt, stufenweise, d.h. in einigen wenigen Schritten, oder kontinuierlich oder quasikontinuierlich, d.h. in vielen kleinen Schritten erfolgt. Im Übrigen sollte die Schichtdicke der Isolationsschicht 12 insgesamt nicht mehr als 6 µm betragen.

Vor dem Hintergrund, dass der Einfluss des Sensorelementes 5 auf das Messergebnis bei der Erfassung der physikalischen Messgröße möglichst gering sein sollte, wird die Fläche des Sensorelementes 5 in Draufsicht und insbesondere die Fläche der Isolationsschicht 12 stets möglichst klein gehalten, so dass der auftretende geschmierte Kontakt möglichst weitgehend nur zwischen den ursprünglichen Oberflächen stattfindet. Diesem Ziel dient auch das Eingraben des Sensorelementes 5 in die Oberfläche des zu untersuchenden Substrates 10 bzw. die Forderung, dass sich die Oberfläche des Sensiersteges 13 bzw. der Deckschicht 14 möglichst auf gleicher Höhe wie die Oberkante des Substrates 10 befindet.

Schließlich führt auch eine möglichst dünne Ausführung der Deckschicht 14 zur einer verringerten Verfälschung des Messsignals des Sensorelementes 5.

Im Übrigen sei noch erwähnt, dass das Substrat 10 und/oder der Gegenkörper 20 beispielsweise aus gehärtetem Stahl (DIN Werkstoffnummer 1.4125 oder 1.3505) besteht.

## Patentansprüche

1. Sensorelement zur Erfassung einer physikalischen Messgröße wie eines Druckes, einer Temperatur, einer Kapazität oder einer Spaltweite zwischen zwei sich bei Betrieb relativ zueinander bewegenden, tribologisch hoch beanspruchten Körpern (10, 20), wobei bereichsweise zwischen den sich relativ zueinander bewegenden Oberflächen der Körper (10, 20) in einem Oberflächenbereich von mindestens einem der Körper (10) eine sensitive Schicht (13, 30) vorgesehen ist, die von dem Körper (10) über eine Isolationsschicht (12) getrennt ist, **dadurch gekennzeichnet, dass** die Isolationsschicht (12) zumindest im Wesentlichen aus Kohlenstoff besteht oder Kohlenstoff, Sauerstoff und Silizium enthält.

2. Sensorelement zur Erfassung einer physikalischen Messgröße wie eines Druckes einer Temperatur oder einer Kapazität zwischen zwei sich bei Betrieb relativ zueinander bewegenden, tribologisch hoch beanspruchten Körpern (10, 20), wobei bereichsweise zwischen den sich relativ zueinander bewegenden Oberflächen der Körper (10, 20) in einem Oberflächenbereich von mindestens einem der Körper (10) eine sensitive Schicht (13, 30) vorgesehen ist, die von dem Körper (10) über eine Isolationsschicht (12) getrennt ist, **dadurch gekennzeichnet, dass** die Isolationsschicht (12) mindestens zwei Teilschichten (31, 32) aufweist, wobei eine Teilschicht (31) eine gegenüber der sensitiven Schicht (13, 30) elektrisch zumindest schlecht leitende Schicht (31) ist, und wobei eine Teilschicht (32) eine gegenüber der vergleichsweise schlecht leitenden Schicht (31) tribologisch höher belastbare Schicht ist.

3. Sensorelement nach Anspruch 2, **dadurch gekennzeichnet, dass** die tribologisch höher belastbare Schicht (32) gegenüber der vergleichsweise schlecht leitenden Schicht (31) eine hohe Härte und/oder einen niedrigen Reibwert aufweist.

4. Sensorelement nach Anspruch 2 oder 3, **dadurch gekennzeichnet, dass** die tribologisch höher belastbare Schicht (32) gegenüber der elektrisch schlecht leitenden Schicht (31) eine elektrisch gut leitende Schicht ist.

5. Sensorelement nach einem der Ansprüche 2 bis 4, **dadurch gekennzeichnet, dass** die tribologisch höher belastbare Schicht (32) zumindest im Wesentlichen aus Kohlenstoff, insbesondere aus diamantartigem oder amorphem diamantähnlichem Kohlenstoff, besteht, und dass die elektrisch vergleichsweise schlecht leitende Schicht (31) Kohlenstoff, insbesondere diamantartigen Kohlenstoff oder amorphen diamantähnlichen Kohlenstoff, und Sauerstoff und Silizium enthält.

6. Sensorelement nach einem der Ansprüche 2 bis 5, **dadurch gekennzeichnet, dass** die Isolationsschicht (12) eine Mehrzahl von übereinander angeordneten, wiederkehrenden Teilschichtpaaren aufweist, wobei unmittelbar unter der sensitiven Schicht (13) zunächst die tribologisch höher belastbare Schicht (32) und darunter dann die gegenüber der sensitiven Schicht (13, 30) elektrisch zumindest schlecht leitende Schicht (31) vorgesehen ist, und wobei diese beiden Schichten (31, 32) das Teilschichtpaar bilden.

7. Sensorelement nach einem der Ansprüche 2 bis 6, **dadurch gekennzeichnet, dass** die tribologisch höher belastbare Schicht (32) eine Schichtdicke von 50 nm bis 5 µm, insbesondere 300 nm bis 1 µm, aufweist, und/oder dass die elektrisch vergleichsweise zumindest schlecht leitende Schicht (31) eine Schichtdicke von 50 nm bis 5 µm, insbesondere 300 nm bis 1 µm, aufweist.

8. Sensorelement nach einem der vorangehenden Ansprüche, **dadurch gekennzeichnet, dass** die sensitive Schicht (13, 30) mit einer abriebbeständigen und gegenüber der sensitiven Schicht (13, 30) elektrisch schlecht leitenden oder isolierenden Deckschicht (14) mit einer Dicke von weniger als 500 nm, insbesondere weniger als 200 nm, versehen ist.

9. Sensorelement nach einem der vorangehenden Ansprüche, **dadurch gekennzeichnet, dass** die Deckschicht (14) Kohlenstoff, insbesondere diamantartigen Kohlenstoff oder amorphen diamantähnlichen Kohlenstoff, enthält oder zumindest im Wesentlichen daraus besteht, oder dass sie Kohlenstoff, insbesondere diamantartigen Kohlenstoff oder amorphen diamantähnlichen Kohlenstoff, und Sauerstoff und Silizium enthält.

10. Sensorelement nach einem der vorangehenden Ansprüche, **dadurch gekennzeichnet, dass** die sensitive Schicht (13, 30) aus einem Metall, insbesondere Chrom, Platin, Titan, einer NiCr-Legierung oder einer NiCuMn-Legierung, besteht, und einen elektrischen Widerstand von 500 Ω bis 3 kΩ aufweist.

11. Sensorelement nach einem der vorangehenden Ansprüche, **dadurch gekennzeichnet, dass** die sensitive Schicht (13, 30) über an zwei Enden vorgesehene, von dem Körper (10) über die Isolationsschicht (12) getrennte Kontaktflächen (11) sowie gegebenenfalls weiteren Leiterbahnen als Teil einer elektrischen Messbrücke mit externen elektronischen Bauteilen verbunden ist.

12. Sensorelement nach einem der vorangehenden Ansprüche, **dadurch gekennzeichnet, dass** die sensitive Schicht (13, 30) gegenüber den Kontaktflächen (11) eine unterschiedliche Dicke, insbesondere eine erheblich kleinere Dicke, aufweist.

13. Sensorelement nach einem der vorangehenden Ansprüche, **dadurch gekennzeichnet, dass** die sensitive Schicht (13, 30) eine Länge von 10 µm bis 5 mm, eine Breite von 50 nm bis 50 µm, und eine Dicke von weniger als 200 nm, insbesondere weniger als 10 nm, aufweist.

14. Sensorelement nach einem der vorangehenden Ansprüche, **dadurch gekennzeichnet, dass** zwischen der Isolationsschicht (12) und dem Körper (10) und/oder zwischen der sensitiven Schicht (13, 30) und der Deckschicht (14) eine Haftschicht (33) vorgesehen ist.

15. Sensorelement nach einem der vorangehenden Ansprüche, **dadurch gekennzeichnet, dass** die Haftschicht (33) zwischen der Isolationsschicht (12) und dem Körper (10) eine Dicke von 20 nm bis 1 µm aufweist und/oder dass die Haftschicht (33) zwischen der sensitiven Schicht (13, 30) und der Deckschicht (14) eine Dicke von 20 nm bis 1 µm aufweist.

16. Sensorelement nach einem der vorangehenden Ansprüche, **dadurch gekennzeichnet, dass** die Haftschicht (33) Kohlenstoff, insbesondere diamantartigen Kohlenstoff oder amorphen diamantähnlichen Kohlenstoff, und Silizium enthält, dass die Haftschicht (33) aus einem Metall wie Titan oder Chrom, einer Legierung oder einem Halbleiter wie Silizium besteht, oder dass die Haftschicht (33) mindestens zwei übereinander angeordnete Teilschichten verschiedener Zusammensetzung aufweist.

17. Sensorelement nach einem der vorangehenden Ansprüche, **dadurch gekennzeichnet, dass** mindestens einer der beiden Körper (10) in einem Oberflächenbereich eine Ausnehmung (23) aufweist, in der die sensitive Schicht (13, 30) auf der Isolationsschicht (12) angeordnet ist.

18. Sensorelement nach einem der vorangehenden Ansprüche, **dadurch gekennzeichnet, dass** die Oberkante der sensitiven Schicht (13, 30) oder der mit einer Deckschicht (14) versehenen sensitiven Schicht (13, 30) zumindest nahezu bündig mit der Oberfläche des Körpers (10) abschließt, diese um maximal 500 nm, insbesondere weniger als 100 nm, überragt, oder gegenüber dieser um maximal 500 nm, insbesondere weniger als 100 nm, zurückgesetzt ist.

19. Sensorelement nach Anspruch 17, **dadurch gekennzeichnet, dass** in der Ausnehmung (23) an zwei Enden der sensitiven Schicht (13, 30) Kontaktflächen (11) angeordnet sind, wobei die Kontaktflächen (11) und die sensitive Schicht (13, 30) über die insbesondere lediglich am Grund der Ausnehmung (23) vorgesehene Isolationsschicht (12) von dem Körper (10) getrennt sind.

20. Sensorelement nach einem der vorangehenden Ansprüche, **dadurch gekennzeichnet, dass** sich die sensitive Schicht (13, 30) unter dem Einfluss der physikalischen Messgröße, insbesondere einem sich ändernden Druck und/oder einer sich verändernden Temperatur, in mindestens einer messbaren physikalischen Eigenschaft, insbesondere ihrem elektrischen Widerstand, verändert.

21. Sensorelement nach einem der vorangehenden Ansprüche, **dadurch gekennzeichnet, dass** die beiden sich relativ zueinander bewegenden Körper (10, 20) durch einen Spalt (21) voneinander getrennt sind, in dem sich ein Schmiermittel (22) befindet.

22. Verwendung eines Sensorelementes nach einem der vorangehenden Ansprüche zur Erfassung eines Kontaktdruckes und/oder einer Kontakttemperatur und/oder einer Spaltweite zwischen tribologisch hoch belasteten, geschmierten Bauteilen im Kontaktbereich.

## Claims

1. Sensor element for recording a physical measurement variable, such as a pressure, a temperature, a capacitance or a gap width between two bodies (10, 20) which in operation move relative to one another and are subject to high tribological loads, a sensitive layer (13, 30) being provided in regions between the surfaces of the bodies (10, 20) which move relative to one another, in a surface region of at least one of the bodies (10), which sensitive layer is separated from the body (10) by an insulation layer (12), **characterized in that** the insulation layer (12) at least substantially consists of carbon or contains carbon, oxygen and silicon.

2. Sensor element for recording a physical measurement variable, such as a pressure, a temperature or a capacitance between two bodies (10, 20) which in operation move relative to one another and are subject to high tribological loads, a sensitive layer (13, 30) being provided in regions between the surfaces of the bodies (10, 20) which move relative to one another, in a surface region of at least one of the bodies (10), which sensitive layer is separated from the body (10) by an insulation layer (12), **characterized in that** the insulation layer (12) includes at least two sublayers (31, 32), one sublayer (31) being a layer (31) which is at least of poor electrical conductivity compared to the sensitive layer (13, 30), and one sublayer (32) being a layer which can be subjected to higher tribological loads than the layer (31) of relatively poor conductivity.

3. Sensor element according to Claim 2, **characterized in that** the layer (32) which can be subjected to higher tribological loads has a high hardness and/or a low coefficient of friction compared to the layer (31) of relatively poor conductivity.

4. Sensor element according to Claim 2 or 3, **characterized in that** the layer (32) which can be subjected to higher tribological loads is a layer of good electrical conductivity compared to the layer (31) of poor electrical conductivity.

5. Sensor element according to one of Claims 2 to 4, **characterized in that** the layer (32) which can be subjected to higher tribological loads at least substantially consists of carbon, in particular of diamond-like carbon or amorphous diamond-like carbon, and **in that** the layer (31) of relatively poor electrical conductivity contains carbon, in particular diamond-like carbon or amorphous diamond-like carbon, and oxygen and silicon.

6. Sensor element according to one of Claims 2 to 5, **characterized in that** the insulation layer (12) includes a plurality of recurring pairs of sublayers arranged above one another, with the layer (32) which can be subjected to higher tribological loads first of all being provided directly beneath the sensitive layer (13), and then the layer (31) which is at least of poor electrical conductivity compared to the sensitive layer (13, 30) being provided beneath the layer (32) which can be subjected to higher tribological loads, and these two layers (31, 32) forming the pair of sublayers.

7. Sensor element according to one of Claims 2 to 6, **characterized in that** the layer (32) which can be subjected to higher tribological loads has a layer thickness of from 50 nm to 5 µm, in particular 300 nm to 1 µm, and/or **in that** the layer (31) which is at least of relatively poor electrical conductivity has a layer thickness of from 50 nm to 5 µm, in particular 300 nm to 1 µm.

8. Sensor element according to one of the preceding claims, **characterized in that** the sensitive layer (13, 30) is provided with an abrasion-resistant covering layer (14) which is of poor electrical conductivity compared to the sensitive layer (13, 30) or is an insulating layer and has a thickness of less than 500 nm, in particular less than 200 nm.

9. Sensor element according to one of the preceding claims, **characterized in that** the covering layer (14) contains or at least substantially consists of carbon, in particular diamond-like carbon or amorphous diamond-like carbon, or **in that** it contains carbon, in particular diamond-like carbon or amorphous diamond-like carbon, and oxygen and silicon.

10. Sensor element according to one of the preceding claims, **characterized in that** the sensitive layer (13, 30) consists of a metal, in particular chromium, platinum, titanium, an NiCr alloy or an NiCuMn alloy, and has an electrical resistance of from 500 Ω to 3 kΩ.

11. Sensor element according to one of the preceding claims, **characterized in that** the sensitive layer (13, 30) is connected to external electronic components via contact surfaces (11), which are provided at two ends and are separated from the body (10) by the insulation layer (12), and if appropriate further conductor tracks as part of an electrical measuring bridge.

12. Sensor element according to one of the preceding claims, **characterized in that** the sensitive layer (13, 30) has a different thickness from the contact surfaces (11), in particular a considerably lower thickness.

13. Sensor element according to one of the preceding claims, **characterized in that** the sensitive layer (13, 30) has a length of from 10 µm to 5 mm, a width of from 50 nm to 50 µm, and a thickness of less than 200 nm, in particular less than 10 nm.

14. Sensor element according to one of the preceding claims, **characterized in that** a bonding layer (33) is provided between the insulation layer (12) and the body (10) and/or between the sensitive layer (13, 30) and the covering layer (14).

15. Sensor element according to one of the preceding claims, **characterized in that** the bonding layer (33) between the insulation layer (12) and the body (10) has a thickness of from 20 nm to 1 µm, and/or **in that** the bonding layer (33) between the sensitive layer (13, 30) and the covering layer (14) has a thickness of from 20 nm to 1 µm.

16. Sensor element according to one of the preceding claims, **characterized in that** the bonding layer (33) contains carbon, in particular diamond-like carbon or amorphous diamond-like carbon, and silicon, **in that** the bonding layer (33) consists of a metal, such as titanium or chromium, an alloy or a semiconductor, such as silicon, or **in that** the bonding layer (3) has at least two sublayers of different composition arranged above one another.

17. Sensor element according to one of the previous claims, **characterized in that** at least one of the two bodies (10), in a surface region, has a recess (23) in which the sensitive layer (13, 30) is arranged on the insulation layer (12).

18. Sensor element according to one of the preceding claims, **characterized in that** the top edge of the sensitive layer (13, 30) or of the sensitive layer (13, 30) provided with a covering layer (14) ends at least virtually flush with the surface of the body (10), projects above the surface of the body (10) by at most 500 nm, in particular less than 100 nm, or is recessed with respect to the surface of the body (10) by at most 500 nm, in particular less than 100 nm.

19. Sensor element according to Claim 17, **characterized in that** contact surfaces (11) are arranged in the recess (23) at two ends of the sensitive layer (13, 30), the contact surfaces (11) and the sensitive layer (13, 30) being separated from the body (10) by the insulation layer (12), which in particular is provided only at the base of the recess (23).

20. Sensor element according to one of the preceding claims, **characterized in that** at least one measurable physical property, in particular the electrical resistance, of the sensitive layer (13, 30) changes under the influence of the physical measurement variable, in particular a changing pressure and/or a changing temperature.

21. Sensor element according to one of the preceding claims, **characterized in that** the two bodies (10, 20) which move relative to one another are separated from one another by a gap (21) in which there is a lubricant (22).

22. Use of a sensor element according to one of the preceding claims for recording a contact pressure and/or a contact temperature and/or a gap width between lubricated components which are subject to high tribological loads in the contact region.

## Revendications

1. Capteur servant à la détection d'une grandeur physique à mesurer comme une pression, une température, une capacité ou une largeur de jeu entre deux corps (10, 20) soumis à une contrainte tribologiquement élevée et se déplaçant l'un par rapport à l'autre en service, une couche sensible (13, 30) séparée du corps (10) par une couche isolante (12) étant prévue par zone entre les surfaces des corps (10, 20) se déplaçant les unes par rapport aux autres dans une zone superficielle d'au moins l'un des corps (10),
**caractérisé en ce que**
la couche isolante (12) se compose au moins essentiellement de carbone ou comprend du carbone, de l'oxygène et du silicium.

2. Capteur servant à la détection d'une grandeur physique à mesurer comme une pression, une température ou une capacité entre deux corps (10, 20) soumis à une contrainte tribologiquement élevée et se déplaçant l'un par rapport à l'autre en service, une couche sensible (13, 30) séparée du corps (10) par une couche isolante (12) étant prévue par zone entre les surfaces des corps (10, 20) se déplaçant les unes par rapport aux autres dans une zone superficielle d'au moins l'un des corps (10),
**caractérisé en ce que**
la couche isolante (12) se compose d'au moins deux couches partielles (31, 32), la première (31) étant une couche (31) à au moins mauvaise conduction électrique par rapport à la couche sensible (13, 30) et la deuxième (32) étant une couche pouvant être soumise à une contrainte tribologiquement plus élevée par rapport à la couche (31) présentant comparativement une mauvaise conduction électrique.

3. Capteur selon la revendication 2,
**caractérisé en ce que**
la couche (32) pouvant être soumise à une contrainte tribologiquement plus élevée affiche une dureté élevée et/ou une valeur de friction faible par rapport à la couche (31) présentant comparativement une mauvaise conduction électrique.

4. Capteur selon la revendication 2 ou 3,
**caractérisé en ce que**
la couche (32) pouvant être soumise à une contrainte tribologiquement plus élevée présente une couche à bonne conduction électrique par rapport à la couche (31) à mauvaise conduction électrique.

5. Capteur selon l'une quelconque des revendications 2 à 4,
**caractérisé en ce que**
la couche (32) pouvant être soumise à une contrainte tribologiquement plus élevée se compose au moins essentiellement de carbone, notamment de carbone de type diamant ou de carbone amorphe similaire au diamant, et la couche (31) présentant comparativement une mauvaise conduction électrique comprend du carbone, notamment du carbone de type diamant ou du carbone amorphe similaire au diamant, ainsi que de l'oxygène et du silicium.

6. Capteur selon l'une quelconque des revendications 2 à 5,
**caractérisé en ce que**
la couche isolante (12) présente un grand nombre de paires de couches partielles disposées les unes sur les autres de manière récurrente, la couche (32) pouvant être soumise à une contrainte tribologiquement plus élevée étant tout d'abord prévue directement sous la couche sensible (13), avant être suivie par la couche (31) à mauvaise conduction au moins électrique par rapport à la couche sensible (13, 30) et ces deux couches (31, 32) formant la paire de couches partielles.

7. Capteur selon l'une quelconque des revendications 2 à 6,
**caractérisé en ce que**
la couche (32) pouvant être soumise à une contrainte tribologiquement plus élevée affiche une épaisseur de couche comprise entre 50 mm et 5 µm, notamment entre 300 nm et 1 µm, et/ou la couche (31) présentant comparativement une mauvaise conduction au moins électrique affiche une épaisseur de couche comprise entre 50 nm et 5 µm, notamment entre 300 nm et 1 µm.

8. Capteur selon l'une quelconque des revendications précédentes,
**caractérisé en ce que**
la couche sensible (13, 30) est pourvue d'une couche de protection isolante (14) ou à faible conduction électrique par rapport à la couche (13, 30) sensible, résistant aux frottements et d'une épaisseur inférieure à 500 nm, notamment inférieure à 200 nm.

9. Capteur selon l'une quelconque des revendications précédentes,
**caractérisé en ce que**
la couche de protection (14) comporte du carbone, notamment du carbone de type diamant ou du carbone amorphe similaire au diamant, ou ce dernier est tout au moins son composant principal ou elle comporte du carbone, notamment du carbone de type diamant ou du carbone amorphe similaire au diamant ainsi que de l'oxygène et du silicium.

10. Capteur selon l'une quelconque des revendications précédentes,
**caractérisé en ce que**
la couche sensible (13, 30) se compose d'un métal, notamment de chrome, de platine, de titane, d'un alliage NiCr ou d'un alliage NiCrMn et présente une résistance électrique de 500 Ω à 3 kΩ.

11. Capteur selon l'une quelconque des revendications précédentes,
**caractérisé en ce que**
la couche sensible (13, 30) est reliée comme pièce d'un pont de mesure électrique à des composants électroniques externes, via des surfaces de contact (11) prévues aux deux extrémités et séparées du corps (10) par la couche isolante (12) ainsi que via d'autres pistes conductrices le cas échéant.

12. Capteur selon l'une quelconque des revendications précédentes,
**caractérisé en ce que**
la couche sensible (13, 30) présente une épaisseur différente, notamment une épaisseur nettement plus petite, par rapport aux surfaces de contact (11).

13. Capteur selon l'une quelconque des revendications précédentes,
**caractérisé en ce que**
la couche sensible (13, 30) présente une longueur comprise entre 10 µm et 5 mm, une largeur comprise entre 50 nm et 50 µm et une épaisseur inférieure à 200 nm, notamment inférieure à 10 nm.

14. Capteur selon l'une quelconque des revendications précédentes,
**caractérisé en ce qu'**
une couche d'adhérence (33) est prévue entre la couche isolante (12) et le corps (10) et/ou entre la couche sensible (13, 30) et la couche de protection (14).

15. Capteur selon l'une quelconque des revendications précédentes,
**caractérisé en ce que**
la couche d'adhérence (33) entre la couche isolante (12) et le corps (10) présente une épaisseur comprise entre 20 nm et 1 µm, et/ou la couche d'adhérence (33) présente une épaisseur comprise entre 20 nm et 1 µm entre la couche sensible (13, 30) et la couche de protection (14).

16. Capteur selon l'une quelconque des revendications précédentes,
**caractérisé en ce que**
la couche d'adhérence (33) contient du carbone, notamment du carbone de type diamant ou du carbone amorphe similaire au diamant et du silicium, la couche d'adhérence (33) se compose d'un métal tel que du titane ou du chrome, d'un alliage ou d'un semi-conducteur comme du silicium, ou bien la couche d'adhérence (33) présente au moins deux couches partielles de différentes compositions disposées l'une sur l'autre.

17. Capteur selon l'une quelconque des revendications précédentes,
**caractérisé en ce qu'**
au moins l'un des deux corps (10) présente dans une zone superficielle un évidement (23) dans lequel la couche sensible (13, 30) est placée sur la couche isolante (12).

18. Capteur selon l'une quelconque des revendications précédentes,
**caractérisé en ce que**
l'arête supérieure de la couche sensible (13, 30) ou la couche sensible (13, 30) pourvue d'une couche de protection (14) se raccorde quasiment à fleur à la surface du corps (10), la dépasse de maximum 500 nm, notamment moins de 100 nm, ou est en retrait de maximum 500 nm, notamment moins de 100 nm, par rapport à cette surface.

19. Capteur selon la revendication 17,
**caractérisé en ce que**
des surfaces de contact (11) sont disposées dans l'évidement (23) sur deux extrémités de la couche sensible (13, 30), les surfaces de contact (11) et la couche sensible (13, 30) étant séparées du corps (10) par la couche isolante (12) prévue notamment simplement sur le fond de l'évidement (23).

20. Capteur selon l'une quelconque des revendications précédentes,
**caractérisé en ce que**
la couche sensible (13, 30) se modifie sous l'influence de la grandeur physique à mesurer, notamment d'une pression se modifiant et/ou d'une température se modifiant, en au moins une propriété physique mesurable, notamment sa résistance électrique.

21. Capteur selon l'une quelconque des revendications précédentes,
**caractérisé en ce que**
les deux corps (10, 20) se déplaçant l'un par rapport à l'autre sont séparés l'un de l'autre par une fente (21) dans laquelle se trouve un lubrifiant (22).

22. Utilisation d'un capteur selon l'une quelconque des revendications précédentes, pour détecter une pression de contact et/ou une température de contact, et/ou une largeur de jeu entre des composants lubrifiés soumis à une contrainte tribologiquement élevée dans la zone de contact.
